# EUROPÄISCHE PATENTANMELDUNG

(11) **EP 4 844 935 A1**
(43) Veröffentlichungstag der Anmeldung: **25.11.2026**
(21) Anmeldenummer: 25177738.9
(22) Anmeldetag: 20.05.2025
(51) Int. Cl.: H01M 50/548, H01M 50/514, H01M 50/503, H01M 50/289, H01M 50/238, H01M 50/233, H01M 50/213, H01M 50/209, H01M 50/179, H01M 50/107

(54) **BATTERIESYSTEM MIT DREI ODER MEHR ELEKTRISCHEN BATTERIEEINHEITEN**

(71) Anmelder: Fraunhofer-Gesellschaft zur Förderung der angewandten Forschung e.V., 80686 München (DE)
(72) Erfinder: GRIEP, Kilian, 64289 Darmstadt (DE); GÖTZ, Benedict, 64289 Darmstadt (DE); SCHÖNEMANN, Artur, 64289 Darmstadt (DE); DIHORA, Savan, 64289 Darmstadt (DE)
(74) Vertreter: Pfenning, Meinig & Partner mbB

(57) **Zusammenfassung**

Die Erfindung bezieht sich auf ein Batteriesystem mit zwei oder drei oder mehr als drei elektrischen Batterieeinheiten (1, 2, 3, 4, 5, 6, 7, 8, 9, 10, 11, 12, 13, 14, 15, 18, 19, 20) von denen jede jeweils eine Längsachse (24, 24a, 24b) und zwei von der Längsachse durchsetzte, einander gegenüberliegende Stirnseiten (25, 26) sowie an jeder Stirnseite einen elektrischen Kontakt aufweist, wobei jeweils zwei oder drei oder mehr als drei Batterieeinheiten in einem Batteriepaket (27) zusammengefasst sind und parallel zueinander insbesondere derart angeordnet sind, wobei ihre Längsachsen die Kanten eines dreikantigen oder mehrkantigen Prismas bilden, und wobei die elektrischen Kontakte aller drei oder mehr Batterieeinheiten an einem oder beiden Enden gemeinsam mittels einer starren, gegen die Kontakte gepressten, bewegbaren Kontaktplatte (16, 17, 21, 22, 23), insbesondere unter Zwischenfügung von Kontaktelementen (28) oder Leiterelementen, elektrisch kontaktiert sind.

## Beschreibung

Die Erfindung liegt auf dem Gebiet der Mechanik und der Elektrotechnik sowie der Fertigungs- und Verarbeitungstechnik und ist mit besonderem Vorteil bei der Konfektionierung von elektrischen Energiespeichern einsetzbar. Elektrische Energiespeicher werden durch den zunehmenden Einsatz von mobilen und Energienetzunabhängigen Geräten und Anwendungen immer wichtiger. Derartige Energiespeicher werden beispielsweise in der Form von Batteriepacks für mobile Werkzeuge (Akku- Werkzeuge), stationäre Energiespeicher für Haushalte und Industrie, beispielsweise für eine unterbrechungsfreie Energieversorgung, und für elektrisch angetriebene Kraftfahrzeuge verwendet. Dabei werden im Normalfall mehrere Batteriezellen miteinander elektrisch verbunden, von denen jede einzelne an ihren elektrischen Anschlüssen elektrische Energie bereitstellt. Dabei können die Batteriezellen bevorzugt wiederaufladbar sein oder auch als Einwegzellen funktionieren.

Dabei ergeben sich als Probleme beispielsweise das zuverlässige und Widerstandsarme Verbinden oder Kontaktieren der Batteriezellen mit anderen Batteriezellen und auch mit einem Kontaktierungssystem in der Form von Busbars oder Sammelschienen.

Die Anforderungen an die Kontaktierung bestehen hauptsächlich darin, eine dauerhafte mechanische Festigkeit und eine niederohmige Stromleitung, also einen geringen Kontaktwiderstand, zu garantieren.

Ein weiteres Problem liegt darin, die Lösbarkeit und Wiederverbindbarkeit von Kontaktierungen zu realisieren. Dabei dürfen an den Batteriezellen keine sicherheits- und/oder funktionsrelevanten Beschädigungen entstehen, da diese sonst nicht wieder- oder weiter benutzt werden können.

Die Lösbarkeit von Kontaktierungen ist für das Recycling von Batteriezellen und Komponenten des Batteriesystems vorteilhaft. Die Wiederverbindbarkeit von Kontaktierungen ist für eine Kreislaufwirtschaft von Batteriezellen und Komponenten des Batteriesystems notwendig.

Aus dem Stand der Technik ist als zuverlässige Verbindungstechnik für Batteriezellen vorwiegend das Verbinden durch Schweißtechnik, durch Löten, Bonden oder Verschrauben von Kontakten sowie das Kontaktieren durch Federn bekannt.

Die genannten Verbindungsarten sind jedoch, wie beispielsweise das Schweißen oder Löten, nur mit großem Aufwand wieder lösbar, oder sie erfordern, wie das Verschrauben von Kontakten, einen relativ hohen Fertigungs- oder Verarbeitungsaufwand.

Der vorliegenden Erfindung liegt daher die Aufgabe zugrunde, ein Batteriesystem mit einer Mehrzahl von Batterieeinheiten zu schaffen, bei dem Batterieeinheiten möglichst geringem Aufwand und hoher Zuverlässigkeit und dennoch leicht wieder lösbar elektrisch miteinander verbunden werden können.

Die Aufgabe wird mit den Merkmalen der unabhängigen Patentansprüche gelöst. Die abhängigen Patentansprüche stellen Umsetzungsmöglichkeiten der Erfindung vor.

Die Erfindung bezieht sich somit auf ein Batteriesystem mit zwei oder drei oder mehr als drei elektrischen Batterieeinheiten, von denen jede jeweils eine Längsachse und zwei von der Längsachse durchsetzte, einander gegenüberliegende Stirnseiten sowie an jeder Stirnseite einen elektrischen Kontakt aufweist, wobei jeweils zwei oder drei oder mehr als drei Batterieeinheiten in einem Batteriepaket zusammengefasst sind und parallel zueinander insbesondere derart angeordnet sind, dass ihre Längsachsen die Kanten eines dreikantigen oder mehrkantigen Prismas bilden, wobei die elektrischen Kontakte aller drei oder mehr Batterieeinheiten an einem oder beiden Enden gemeinsam mittels einer starren, gegen die Kontakte gepressten, bewegbaren Kontaktplatte, insbesondere unter Zwischenfügung von Kontaktelementen oder Leiterelementen, elektrisch kontaktiert sind.

Die Batterieeinheiten können dabei beispielsweise einzelne Batteriezellen oder Stapel von Batteriezellen sein oder andere Einheiten, beispielsweise Batteriepakete, die jeweils aus mehreren Batteriezellen bestehen und an ihren Stirnseiten elektrische Kontakte aufweisen. Die drei oder mehr Batterieeinheiten sollten dabei im Wesentlichen dieselbe Höhe in Richtung parallel zu den Kanten des prismatischen Batteriepakets aufweisen. Die Kontaktplatte ist zwar in sich starr, das heißt im Prinzip nicht biegsam, jedoch bewegbar, so dass sie durch ihre Bewegbarkeit Höhenunterschiede der einzelnen Batterieeinheiten ausgleichen und alle Batterieeinheiten mit nahezu dergleichen Kontaktkraft elektrisch kontaktieren kann. Zu diesem Zweck sind die Kontaktplatten jeweils beweglich gelagert, aber mit einer Kraft in Richtung der Längsachsen der Batterieeinheiten belastbar. Die Kontaktplatten können, wie weiter unten noch näher ausgeführt wird, elektrisch isolierte Leiterelemente oder Kontaktelemente enthalten oder es können solche Elemente zwischen den Kontaktplatten und den Stirnseiten der Batterieeinheiten vorgesehen und eingeklemmt sein.

Ein solches Batteriesystem kann beispielsweise dadurch ausgestaltet werden, dass eine oder mehrere Kontaktplatten eines Batteriepaketes gegen die Längsachsen der Batterieeinheiten in einer oder mehreren Richtungen kippbar ist.

Durch Zug- oder Druckelemente, die mit den Kontaktplatten gelenkig verbunden sind, können diese mit einer Kraft belastet werden. Zugelemente können zum Beispiel an einer Öse einer Kontaktplatte angreifen oder Druckelemente können mit einer spitzen oder gerundeten Fläche gegen die Kontaktplatte gepresst werden. Wenn jeweils nur drei Batterieeinheiten zusammengefasst werden, können diese durch geeignete Kippung der Kontaktplatte immer kontaktiert werden. Es können jeweils für drei oder mehr Batterieeinheiten auch zusätzlich elastische Ausgleichselemente wie Federn zwischen den Kontaktplatten und den Stirnseiten der Batterieeinheiten vorgesehen sein. Solche Ausgleichselemente können jedoch durch die Erfindung in vielen Fällen auch komplett eingespart werden, so dass keine solchen Ausgleichslemente vorgesehen sind.

Eine weitere Ausgestaltung eines Batteriesystems kann vorsehen, dass zwei an gegenüberliegenden Enden eines Batteriepaketes angeordnete Kontaktplatten durch ein Zugelement, insbesondere eine Schraube oder eine Gewindestange, gegeneinander verspannt sind.

Diese Lösung minimiert den Platzbedarf, da das Zugelement in dem Raum zwischen den Batterieeinheiten angeordnet werden kann. Die Schraube oder Gewindestange kann mittels eines Seils oder Drahtes oder eines anderen beweglichen Elementes mit einer der Kontaktplatten verbunden sein oder ein mit einem Gewinde versehener Teil der Kontaktplatte kann gegen die übrigen Teile der Kontaktplatte bewegbar sein.

Anstelle einer Gewindestange kann auch ein elastisches, spannbares Element, beispielsweise eine Feder oder ein Elastomerstrang, vorgesehen sein.

Es kann dabei auch vorgesehen sein, dass ein oder mehrere Batteriepakete in einer Aufnahme, insbesondere in einem Gehäuse angeordnet sind und wenigstens eine bewegbare Kontaktplatte oder zwei an gegenüberliegenden Enden eines Batteriepaketes angeordnete Kontaktplatten, von denen wenigstens eine bewegbar ist, durch ein Element der Aufnahme oder ein an der Aufnahme abgestütztes Element gegen die elektrischen Kontakte an je einem Ende des Batteriepaketes pressbar oder gepresst sind, insbesondere unter Zwischenfügung von Kontaktelementen oder Leiterelementen.

In einem solchen Fall kann ein an der Aufnahme oder dem Gehäuse abgestütztes Element durch eine Schraube oder Gewindestange gebildet sein, da sich die Kontaktkraft in diesem Fall besonders gut dosieren lässt.

Eine passende Aufnahme für die Batterieeinheiten kann durch ein Gehäuse selbst oder durch Einbauten in einem Gehäuse wie beispielsweise Stege oder Wände in oder an dem Gehäuse gebildet sein.

Es kann dazu vorgesehen sein, dass eine in einer Gewindebohrung der Aufnahme oder des Gehäuses geführte Schraube oder Gewindestange oder ein spannbares elastisches Element gegen eine oder mehrere Kontaktplatten pressbar oder gepresst ist. Eine Stirnseite der Schraube oder Gewindestange kann dabei unmittelbar an einer Kontaktplatte oder in einer Mulde oder Ausnehmung an einer Seite der Kontaktplatte anliegen.

Die Erfindung bezieht sich auch auf ein Batteriesystem mit zwei oder mehr elektrischen Batterieeinheiten, die jeweils zwei elektrische Anschlüsse oder Kontakte aufweisen, wobei jeweils wenigstens zwei Batterieeinheiten elektrische Anschlüsse mit Blechfahnen aufweisen und die Blechfahnen von wenigstens zwei verschiedenen Batterieeinheiten einander kontaktieren und gemeinsam gefalzt sind.

Beim Falzen werden Blechfahnen von verschiedenen Batterieeinheiten zumindest abschnittsweise parallel zueinander ausgerichtet und zumindest teilweise gemeinsam gebogen. Dadurch entsteht eine gemeinsame Verformung, die einen elektrischen Kontakt etabliert. Je nach Art der Biegung kann der auf diese Weise geschaffene Kontakt über eine kleinere oder größere Kontaktfläche geschaffen und mit einer je nach Art der Biegung unterschiedlichen Kontaktkraft versehen werden. Die so geschaffenen Verbindungen sind in vielen Fällen sehr dauerhaft und unempfindlich gegen äußere Einflüsse wie beispielsweise Bewegungen und Vibrationen. Eine derartige elektrische Kontaktierung mittels Anschlussfahnen eignet sich besonders für die Paketierung von Pouchzellen, die in vielen Fällen eine flache rechteckige Form haben.

Ein solches Batteriesystem kann beispielsweise dadurch ausgestaltet sein, dass jeweils die Blechfahnen von drei oder mehr als drei Batterieeinheiten gemeinsam gefalzt sind.

Es lassen sich somit mit begrenztem Aufwand, insbesondere Verarbeitungsaufwand, viele Verbindungen herstellen.

Zudem kann vorgesehen sein, dass die Blechfahnen ein Metall mit vernickeltem Stahl oder vernickeltem Eisen, Kupfer oder Aluminium oder einer Legierung mit einem dieser Materialien enthalten.

Diese Materialien lasen sich gut beim Falzen verarbeiten und schaffen einen niederohmigen und dauerhaften elektrischen Kontakt.

Die Erfindung bezieht sich auch auf ein Batteriesystem mit zwei oder mehr elektrischen Batterieeinheiten, die jeweils zwei elektrische Anschlüsse aufweisen, wobei jeweils wenigstens zwei Anschlüsse unmittelbar einander benachbarter Batterieeinheiten oder ein Anschluss einer Batterieeinheit und ein Anschluss eines Kontaktierungssystems durch eine Presspassung elektrisch miteinander verbunden sind.

Ein solches Batteriesystem ist dazu geeignet, notwendige Kontaktkräfte, verbunden mit einer stabilen mechanischen Verbindung herzustellen. Die Kontaktkräfte basieren dabei auf der elastischen Kräften, die nach der Verformung der Partner der Presspassung wirken.

Allerdings ist für eine solche Verbindung eine hohe Genauigkeit bei der Fertigung der zu verbindenden Partner erforderlich.

Mit derartigen Verbindungen lassen sich sowohl einzelne Batteriezellen als auch Stapel von Batteriezellen oder andere mit entsprechenden Passelementen ausgestattete Batteriepakete dauerhaft und stabil gegen äußere Einflüsse miteinander verbinden.

Ein Batteriesystem der beschriebenen Art kann auch dadurch ausgestaltet werden, dass eine Mehrzahl von Batterieeinheiten an wenigstens einem ihrer elektrischen Anschlüsse eine Ausnehmung oder eine von einem Randsteg umgebene Aufnahme aufweist, in die jeweils ein Kontaktbolzen einer weiteren Batterieeinheit oder eines Kontaktsystems in einer Presspassverbindung einpressbar ist, oder eine Erhebung, insbesondere einen Bolzen, der in eine passende Ausnehmung an einem Kontaktsystem oder einer anderen Batterieeinheit einpressbar ist. Verschiedene Kombinationen solcher Presspassungen zwischen Batteriezellen oder Batteriezellen und Leitern eines Kontaktsystems sind weiter unten noch näher beschrieben.

Alle weiter oben beschriebenen Batteriesysteme können beispielsweise vorsehen, dass eine Batterieeinheit durch jeweils eine Batteriezelle oder einen Stapel von Batteriezellen oder ein Stapel von Batteriepaketen gebildet ist.

Die Zusammenstellung von derartigen Einheiten ist kaskadierbar, das heißt, es können mit den beschriebenen Verbindungen zunächst Batteriezellen zu Batteriepaketen verbunden und danach mit derselben Verbindungstechnik auch jeweils zwei oder drei oder mehr als drei Batteriepakete miteinander verbunden werden. Auch die so entstehenden Einheiten können weiter mit der beschriebenen Verbindungstechnik verbunden werden.

Jede derart gestaltete Batterieeinheit lässt sich somit mit einer oder mehreren anderen gleichartigen Batterieeinheiten durch die beschriebenen Verbindungslösungen in einer aufwandsarmen, zuverlässigen Weise lösbar elektrisch verbinden.

Weiter kann bei den beschriebenen Batteriesystemen vorgesehen sein dass sie jeweils mehr als 100, insbesondere mehr als 500 Batteriezellen aufweisen. Durch die beschriebenen Verbindungslösungen kann jeweils eine große Anzahl von Batterieeinheiten, beispielsweise Batteriezellen, miteinander verbunden werden. Dies ist besonders bei großen Energiespeichern für stationäre Systeme oder Kraftfahrzeuge mit Elektroantrieb sinnvoll.

Die Erfindung bezieht sich weiterhin auf Batteriesysteme der beschriebenen Art mit Kontaktplatten, bei denen eine oder mehrere, insbesondere alle Kontaktpatten aus Metallblechen oder aus Kunststoffplatten aus einem elektrisch leitenden Kunststoff oder aus einem isolierenden Kunststoff bestehen, wobei insbesondere in die Kontaktplatten integriert oder zwischen diesen und den Kontakten von Batterieeinheiten Leiterelemente vorgesehen sind.

Die Kontaktplatten können beispielsweise aus einem Stahlblech oder einem Blech aus einem anderen duktilen Material bestehen, wobei korrosionsarme Materialien vorteilhaft sein können. Im Fall einer Kontaktplatte aus einem elektrisch leitenden Kunststoff kann das Kunststoffmaterial beispielsweise bereichsweise mit einem elektrisch leitenden Pulvermaterial wie Kohlenstoff oder einem Metallstaub gefüllt sein. In eine solche Kontaktplatte können elektrisch leitende und elektrisch isolierende Bereiche integriert sein, um eine stabile Leiterstruktur zur selektiven Kontaktierung von Batterieeinheiten zu ermöglichen.

Die Kontaktplatten können zur besseren Anpassung an die Batterieeinheiten in den Bereichen, in denen sie auf die Batterieeinheiten eine Presskraft ausüben sollen jeweils noppenartige Erhöhungen aufweisen, die den Batterieeinheiten zugewandt sind.

Es kann dabei beispielsweise vorgesehen sein, dass die Kontaktplatten jeweils eine abgerundete oder nicht abgerundete dreieckige Form oder eine drei-zählige Symmetrie aufweisen.

Damit lassen sich die Kontaktplatten an den Platzbedarf eines prismatischen Batteriepakets gut anpassen und benötigen nur minimalen Raum.

Außerdem kann bei allen weiter oben beschriebenen Batteriesystemen vorgesehen sein, dass die Batteriezellen jeweils in Richtung ihrer Längsachse oder in Richtung der Längsachse der jeweiligen Batterieeinheit größere Abmessungen haben als in den senkrecht darauf stehenden Richtungen und insbesondere jeweils eine prismatische oder zylindrische Form aufweisen.

Besonders bei derart geformten Zellen können die beschriebenen Kontaktierungs- und Verbindungsverfahren, besonders bei der Komprimierung mit Kontaktplatten, vorteilhaft verwendet werden.

Die Nachteile bei den bekannten Verbindungsverfahren in der Form von Schweißverfahren, beim Drahtbonden und Löten bestehen darin, dass diese nicht oder schlecht lösbar sind und ein Wärmeeintrag in die Batteriezellen stattfindet. Beim Verschrauben bestehen die Nachteile in dem zusätzlichen Gewicht und der Anzahl der benötigten Teile sowie der komplexen Automatisierung des Prozesses in der Fertigung.

Die Lösbarkeit und Wiederverbindbarkeit von Kontaktierungen wurde bisher nur bedingt erreicht. Mit einer Verschraubung ist die Lösung generell möglich, jedoch überwiegen dort die Nachteile. Die anderen gängigen Verfahren zur Kontaktierung sind nicht lösbar.

Durch die Erfindung werden Batteriesysteme mit einfach herstellbaren, leicht lösbaren und dennoch zuverlässigen elektrischen Verbindungen geschaffen.

Im Folgenden wird die Erfindung in Figuren einer Zeichnung gezeigt und anschließend beschrieben.

Dabei zeigen:
Figuren 1a, b, Figuren 2a, b, c sowie Figur 3 die Verbindung von Batterieeinheiten durch Falzen von Anschlussfahnen,

Figuren 4, 5a, 5b, 5c, 6, 7a, 7b, 8, 9a,9b, 10a, 10b, 11, 12a, 12b, 13, 14 und 15 verschiedene Verbindungen von Anschlüssen/Kontakten von Batterieeinheiten durch Presspassungen, sowie

Figuren 16a, 16b, 16c, 16d, 17, 18a, 18b, 18c19, 20a, 20b, 20c, 21a, 21b, 21c, 22, 23 und 24 jeweils Verbindungen und Kontaktierungen von Batterieeinheiten mit Kontaktplatten, die gegen die Batterieeinheiten gepresst werden.

Eine Lösung besteht in der Anwendung (und Anpassung) von Fügen durch Falzen zur Kontaktierung von Batteriezellen oder Batterieeinheiten. Nach DIN 8593-5 ist "Falzen: Fügen durch Umformen derart, dass an ihren Rändern vorbereitete Blechteile ineinandergelegt oder ineinandergeschoben werden und durch Umlegen der Ränder einen Formschluss erhalten." Mit Fügen durch Falzen wird sowohl eine dauerhafte mechanische Festigkeit der Kontaktierung als auch eine niederohmige Stromleitung durch die Kontaktierung gewährleistet. Das explizite Vorbereiten der Bleche/Anschlussfahnen/Fähnchen ist nicht nötig, kann teilweise aber hilfreich sein. Sobald die Bleche/Anschlussfahnen/Fähnchen entsprechend zueinander positioniert sind, können diese gefalzt werden. Ob dabei beide gleichzeitig, nur eins, beide nacheinander und/oder anschließend zusammen umgeformt werden, hat nur geringen Einfluss.

Dies hängt sowohl von der gewählten Falzart als auch von den möglichen Herstellungsabläufen und verschiedenen Herstellungsverfahren ab.

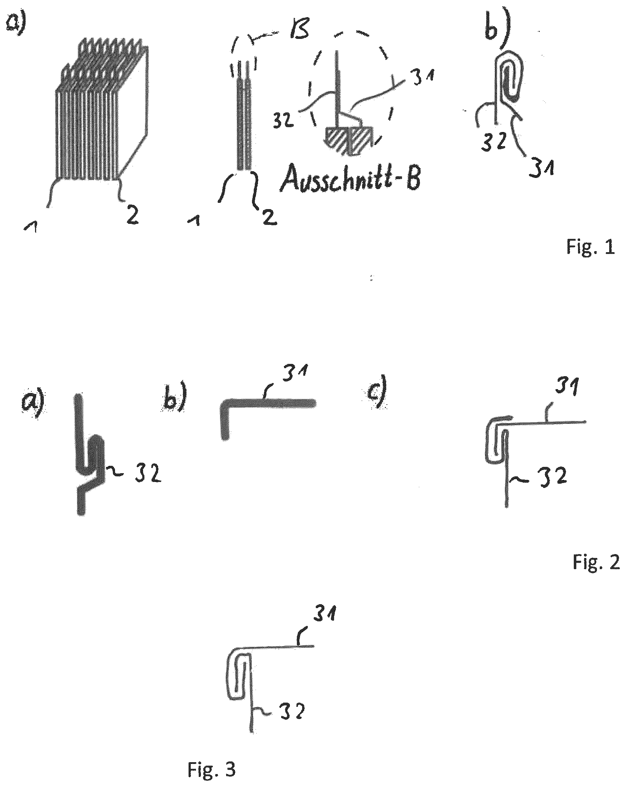

In den Figuren 1a, 1b ist gezeigt, dass zwei Pouchzellen mit Fügen durch Falzen in Form eines Doppelfalzes kontaktiert werden.

Die Batteriezellen 1, 2 in der Form von Pouchzellen und deren Fähnchen sind, wie in Figur 1 a zusehen, nebeneinander positioniert. Das Fähnchen 31 der zweiten Pouchzelle ist so verformt, dass es das Fähnchen 32 der ersten Pouchzelle flächig berührt. Das Fähnchen 32 wird um das Fähnchen 31 umgelegt, sodass das Fähnchen 31 vom Fähnchen 32 umschlossen ist. Anschließend werden Fähnchen 31 und 32 zusammen in dieselbe Richtung erneuert umgelegt, sodass sich beide Fähnchen zusammen umschließen. Das finale Aussehen des Falzes ist in Figur 1b dargestellt.

In den Figuren 2a-c ist gezeigt, dass eine Pouchzelle mit dem Kontaktierungssystem mit Fügen durch Falzen in Form eines Pittsburghfalz verbunden wird. Das Fähnchen der Pouchzelle wird zu einem Pittsburghfalz, dargestellt in Figur 2a, umgeformt und das entsprechende Stück des Kontaktierungssystems zu einem passenden Stehfalz, zusehen in Figur 2 b. Anschließend wird der Stehfalz des Kontaktierungssystems in den Pittsburghfalz eingesteckt. Zuletzt wird der noch abstehende Teil des Pittsburghfalzes zum Kontaktierungssystem hin umgelegt und der Falz somit geschlossen. Der geschlossene Falz ist in der Figur 2c zusehen.

In der Figur 3 ist dargestellt, dass eine zylindrische Zelle (Ausführung mit Fähnchen 32) mit einem Leiter 31 eines Kontaktierungssystems mit Fügen durch Falzen in Form eines Eckfalzes verbunden ist.

Das Fähnchen der zylindrischen Zelle wird um 180° umgelegt, aber sodass ein Spalt bestehen bleibt. Dasselbe wird mit dem entsprechenden Teil des Kontaktierungssystems gemacht. Anschließend werden beide ineinander eingeschoben und durch Zusammenpressen verschlossen. Zuletzt wird der entsprechende Teil des Kontaktierungssystems noch um 90° umgelegt, um den Eckfalz herzustellen. Der geschlossene Falz ist in Figur 3 dargestellt.

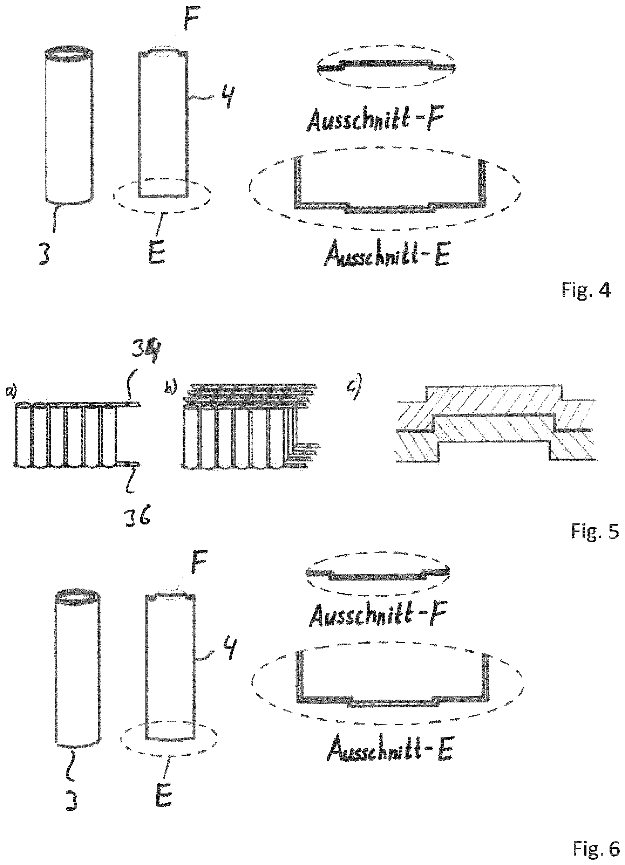

In der Figur 4 sind Batteriezellen 3, 4 gezeigt, wobei bei der Batteriezelle 4 am oberen Ende und an ihrem unteren Ende je ein vorstehender Noppen dargestellt sind. Auf der rechten Seite der Figur 4 sind in vergrößerten Ausschnitten die Noppen am oberen und unteren Ende der Zelle dargestellt.

Die mit Erhebungen in Form von Noppen modifizierten zylindrischen Batteriezellen werden in das Kontaktierungssystem mit entsprechenden Vertiefungen eingepresst. Die Figur 4 zeigt eine entsprechend gestaltete Zelle.

In der Figur 5 ist zunächst die allgemeine Form des Einpressens dargestellt. Es ist dort die Kontaktierung von Batteriezellen in der Form von Fügen durch Einpressen gezeigt. Nach DIN 8593-3 ist "Fügen durch Einpressen: Fügen durch Ineinanderschieben eines Innenteiles und eines Außenteiles, wobei zwischen beiden ein Übermaß besteht." Mit Fügen durch Einpressen wird sowohl eine dauerhafte mechanische Festigkeit der Kontaktierung als auch eine niederohmige Stromleitung durch die Kontaktierung gewährleistet. Für die Kontaktierung von Batteriezellen wird Fügen durch Einpressen ähnlich zum Stanzpaketieren angepasst. Dort werden die Bleche zuerst geprägt, wobei auf der einen Seite des Bleches eine Erhebung mit eckigen Kanten und auf der anderen Seite eine Vertiefung mit eckigen Kanten entsteht. Anschließend werden die Bleche paketiert, also die Erhebung des einen Bleches in die Vertiefung des anderen Bleches gepresst, was zur Herstellung eines Pressverbundes führt. Diese Art der Verbindung kommt von der Größe und Geometrie der Verbindung sowie den herrschenden Kräften in der Verbindung der Erfindung am nächsten. Jedoch ist die Verbindung der hier beschriebenen Batterieelemente verschieden von einer Verbindung beim Stanzpaketieren. Es werden bei der Erfindung nur wenige Teile miteinander verbunden und bei diesen handelt es sich nicht nur um Bleche wie beim Stanzpaketieren, sondern jeweils um Enden von Batterieeinheiten, die miteinander verbunden werden oder um jeweils ein Ende einer Batterieeinheit und einen Leiter eines Kontaktierungssystems. Des Weiteren sind die möglichen Herstellungsverfahren und -abläufe grundlegend anders. Bei der Erfindung werden die Batteriezellen und die entsprechenden Teile des Kontaktierungssystems so modifiziert, dass an den Kontaktstellen die entsprechenden Erhebungen und Vertiefungen angeordnet sind, um mit Fügen durch Einpressen einen Pressverbund herzustellen. Diese werden so ausgelegt, dass eine Übermaßpassung zwischen den Teilen entsteht. Die Passung und Materialien werden so gewählt, dass die herrschenden Kräfte in der Verbindung während des Bestehens als auch während Verbindens und Lösens keine sicherheits- und/oder funktionsrelevanten Schäden an den Batteriezellen entstehen. Gegebenenfalls wird die Beschädigung oder Zerstörung des Kontaktierungssystems beim Lösen der Verbindung hingenommen.

In Figur 5a sind die Zellen mit einem mit ihnen verbundenen Kontaktierungssystem als Strang angeordnet zu sehen, in Figur 5b als Paket angeordnet. In Figur 5c ist ein Schnitt durch die Kontaktierung/Presspassung dargestellt. Dieser zeigt den Pressverbund der zylindrischen Noppe der Zelle und die entsprechende Vertiefung des Kontaktierungssystems.

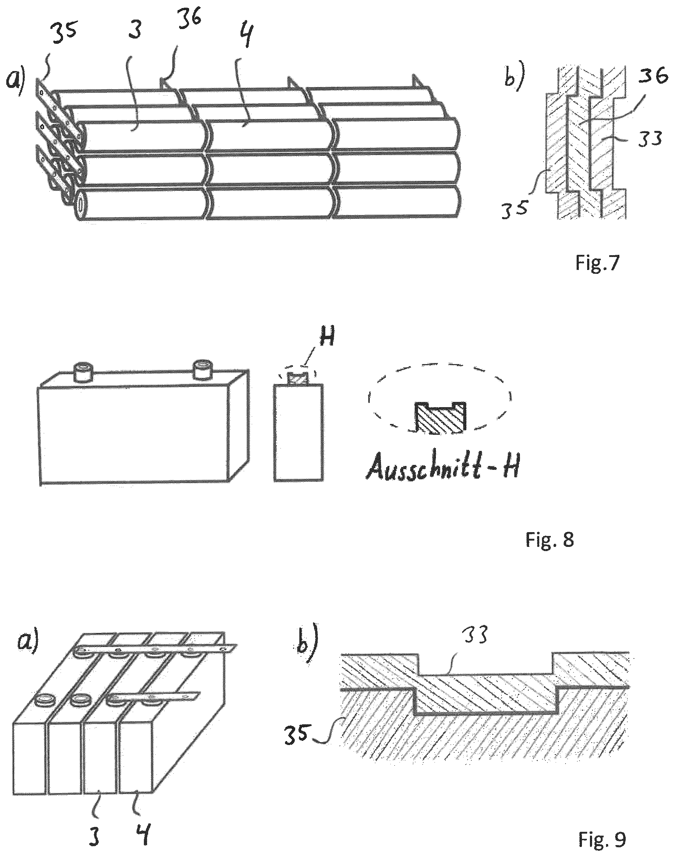

In der Figur 6 sind zwei zylindrische Batteriezellen 3, 4 mit Erhebungen und Vertiefungen gemeinsam mit weiteren zylindrischen Zellen mit Erhebungen und Vertiefungen und in der Figur 7 mit einem Kontaktierungssystem mit Erhebungen und Vertiefungen dargestellt, die jeweils mittels Fügen durch Einpressen verbunden sind.

Die zylindrischen Zellen sind in diesem Fall mit einer zylindrischen Erhebung am Minuspol und einer zylindrischen Vertiefung am Pluspol modifiziert, dargestellt in der Figur 6. Das Kontaktierungssystem weist an seinen Leitern 34, 36 (Bandleitern) sowohl die entsprechenden Noppen als auch Vertiefungen an denselben Stellen, aber unterschiedlichen Seiten des jeweiligen Bandleiters auf. Somit können die Zellen und das Kontaktierungssystem zu einem Paket zusammengefügt werden. Dafür werden auf der jeweiligen Seite desjeweiligen Bandleiters die Zellen entsprechend eingepresst, mit Ausnahme von Anfang und Ende des Bandleiters. Dies wird in Figur 7a gezeigt. Das Kontaktierungssystem/der Bandleiter 36 zwischen den Zellen ist/sind nicht notwendig, aber hilfreich für die gewünschte Verschaltung, Herstellung des Pressverbundes und Festigkeit des Pakets. In der Figur 7 b ist ein Schnitt durch eine Kontaktierung von zwei Zellen 33, 35 und dem Leiter 36 des Kontaktierungssystems dazwischen zu sehen.

In den Figuren 8 und 9a, 9b sind prismatische Zellen mit Vertiefungen gezeigt, die mit einem Kontaktierungssystem mit Erhebungen mittels Fügen durch Einpressen verbunden/kontaktiert sind.

Die zylindrischen Kontaktstellen der prismatischen Zellen 3, 4 werden mit Vertiefungen, wie in Figur 8 gezeigt, ausgestattet. In diese Vertiefungen werden die Noppen des bandförmigen Leiters des Kontaktierungssystems eingepresst. In Figur 9a ist die Kontaktierung von mehreren Batteriezellen 3, 4 dargestellt. Die Figur 9b zeigt einen Schnitt durch die Kontaktierung, in dem der Pressverbund zwischen den Elementen 33 und 35 dargestellt ist.

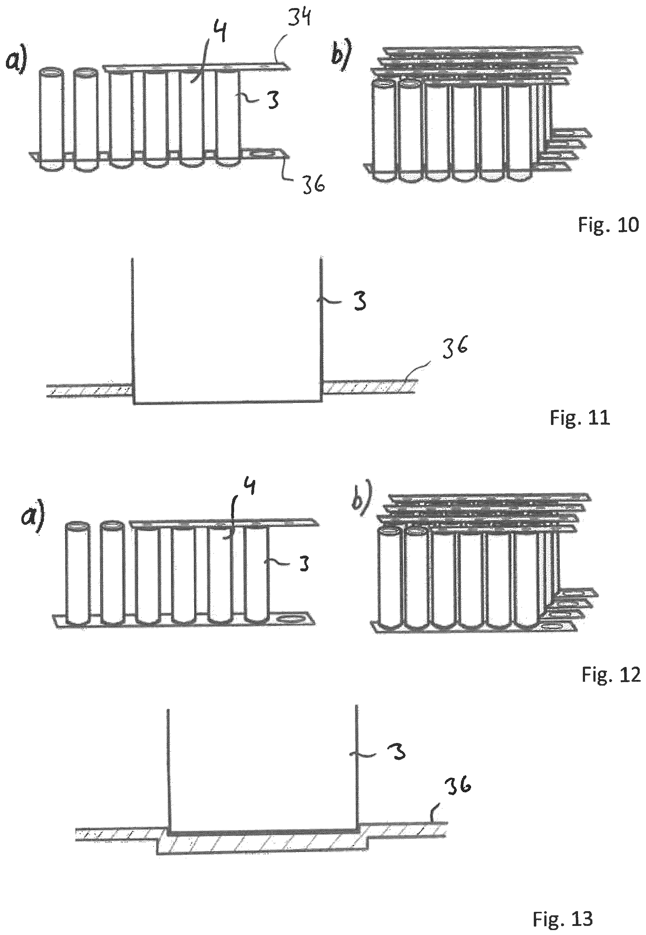

Bei den in den Figuren 10a, 10b und 11 gezeigten Beispielen wird für die Kontaktierung von Batteriezellen das Fügen durch Einpressen verwendet, indem die ganze Zelle oder Kontaktstelle der Zelle, beispielsweise ein Noppen an der Zelle, der einen elektrischen Kontakt bildet, in einen Bandleiter eines Kontaktierungssystems eingepresst wird. Der entstehende Pressverbund wird so ausgelegt, dass eine Übermaßpassung zwischen den Teilen entsteht. Die Passung und Materialien werden so gewählt, dass die herrschenden Kräfte in der Verbindung während des Bestehens als auch während Verbindens und Lösens keine sicherheits- oder funktionsrelevanten Schäden an den Batteriezellen verursachen. Gegebenenfalls wird die Beschädigung oder Zerstörung des Kontaktierungssystems beim Lösen der Verbindung hingenommen.

Das Ende der zylindrischen Batteriezelle/Zelle 3 wird gemäß Figur 11 als Ganzes in den Leiter 36 des Kontaktierungssystems, welcher ein entsprechendes Loch aufweist, eingepresst. Die Figur 11 ist somit eine Detaildarstellung eines Ausschnitts aus der Figur 10. Der entstehende Pressverbund wird so ausgelegt, dass eine Übermaßpassung zwischen den Teilen entsteht. Die Passung und Materialien werden so gewählt, dass die herrschenden Kräfte in der Verbindung während des Bestehens als auch während Verbindens und Lösens keine sicherheits- oder funktionsrelevanten Schäden an den Batteriezellen verursachen. Gegebenenfalls wird die Beschädigung oder Zerstörung des Kontaktierungssystems beim Lösen der Verbindung hingenommen, wobei die Elemente der Batteriezellen unbeschädigt bleiben. Bei dieser Variante der Kontaktierung wird nur der Minuspol der zylindrischen Batteriezelle kontaktiert. In der Figur 10a sind die kontaktierten Batteriezellen als Strang angeordnet dargestellt und in Figur 10b als Paket mit einer dichteren Anordnung. Die Figur 11 zeigt einen Schnitt durch die Kontaktierung, wobei das Innere der Zelle/Batteriezelle nicht dargestellt ist.

In den Figuren 12a, 12b und 13 ist eine weitere Variante der Verbindung durch Presspassung dargestellt.

Die zylindrische Batteriezelle 3, 4 wird in eine Vertiefung eines Leiters 36 des Kontaktierungssystems eingepresst. Der entstehende Pressverbund wird so ausgelegt, dass eine Übermaßpassung zwischen den Teilen entsteht. Die Passung und Materialien werden so gewählt, dass die herrschenden Kräfte in der Verbindung während des Bestehens als auch während Verbindens und Lösens keine sicherheits- oder funktionsrelevanten Schäden an den Batteriezellen verursachen. Gegebenenfalls wird die Beschädigung oder Zerstörung des Kontaktierungssystems beim Lösen der Verbindung hingenommen. Bei dieser Variante der Kontaktierung wird nur der Minuspol der zylindrischen Batteriezelle in der dargestellten Weise kontaktiert. In der Figur 12a sind die kontaktierten Zellen als Strang angeordnet dargestellt und in Figur 12b als Paket mit einer dichteren Anordnung. Die Figur 13 zeigt einen Schnitt durch die Kontaktierung einer Vertiefung eines Leiters 36 mit einem Endbereich der Batteriezelle 3, wobei das Innere der Batteriezelle nicht dargestellt ist.

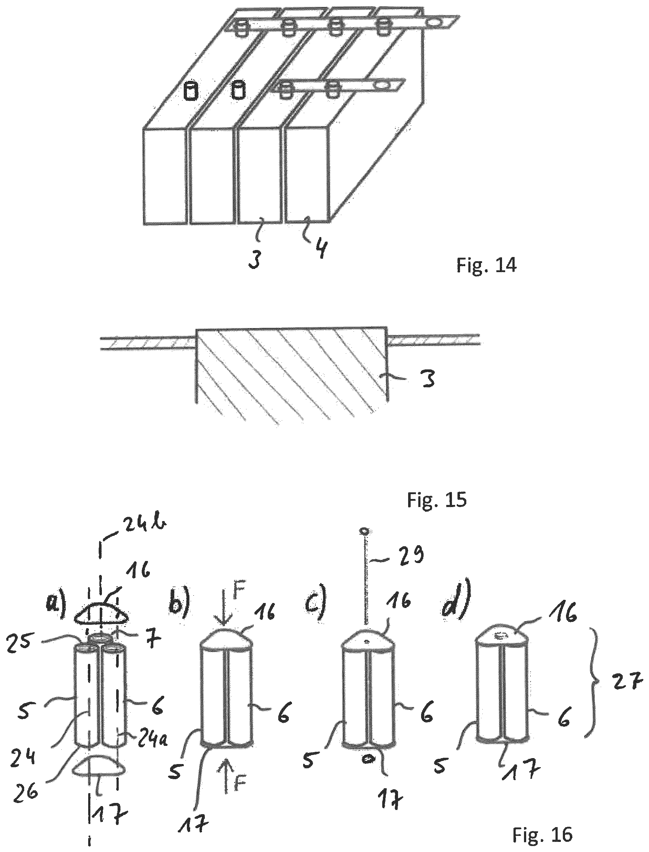

In den Figuren 14 und 15 ist die Verbindung/Kontaktierung von prismatischen Batteriezellen mit einem Leiter eines Kontaktierungssystems mittels Fügen durch Einpressen gezeigt.

Die zylindrischen Kontaktstellen der prismatischen Batteriezellen werden in das Kontaktierungssystem, welches entsprechende Löcher aufweist, eingepresst. Der jeweils entstehende Pressverbund wird so ausgelegt, dass eine Übermaßpassung zwischen den Teilen entsteht. Die Passung und Materialien werden so gewählt, dass die herrschenden Kräfte in der Verbindung während des Bestehens als auch während Verbindens und Lösens keine sicherheits- oder funktionsrelevanten Schäden an den Batteriezellen verursachen. Gegebenenfalls wird die Beschädigung oder Zerstörung des Kontaktierungssystems beim Lösen der Verbindung hingenommen. In der Figur 14 sind die kontaktierten Zellen als Strang angeordnet zu sehen, und die Figur 15 zeigt einen Schnitt durch die Kontaktierung.

Die Figuren 16 bis 24 beziehen sich auf das Verbinden von Batterieeinheiten/Batteriezellen 5, 6, 7, 8, 9, 10, 11, 12, 13, 14, 15, 18, 19, 20, 27 mittels Klemmen mit Kontaktplatten 16, 17, 21.

Durch die Nutzung des Klemmverfahrens zur Kontaktierung von Batteriezellen wird eine zuverlässige elektrische Kontaktierung sowie die leichte Lösbarkeit der auf diese Weise hergestellten Verbindung erreicht.

Die erfindungsgemäße Lösung sieht bei dieser Verbindungsvariante vor, dass zwei, drei oder mehr als drei Batteriezellen oder Batterieeinheiten mit einem Element in Form einer Kontaktplatte geklemmt werden, wobei in vielen Fällen keine Komponenten für den Längenausgleich benötigt werden. Das klemmende Element/die Kontaktplatte verkippt entsprechend den unterschiedlichen Längen der zylindrischen Batteriezellen oder Batterieeinheiten, und alle Zellen werden mit derselben Kraft geklemmt, insbesondere bei dem Sonderfall von drei zu klemmenden Elementen. Am besten funktioniert dies bei einer Klemmung von zwei oder drei Batteriezellen oder Batterieeinheiten, die jeweils aus Batteriezellen oder wiederum aus Batterieeinheiten, beispielsweise Batteriezellenstapeln bestehen können.

In den Figuren 16a bis 16d ist der Fall eines Batteriepaketes mit drei Batteriezellen dargestellt.

Für die Klemmung von drei zylindrischen Zellen zur Kontaktierung werden, wie in Figur 16a dargestellt, drei Batteriezellen 5, 6, 7 zwischen zwei Kontaktplatten 16, 17 in der Form von Dreieckselementen positioniert. Die Längsachsen der Batteriezellen sind mit 24, 24a, 24b bezeichnet. Diese sind parallel zueinander ausgerichtet und bilden die Kanten eines dreiseitigen Prismas. Durch das Aufbringen einer Klemmkraft F, wie in Figur 16b eingezeichnet, werden die Zellen geklemmt. Dabei verkippen die Kontaktplatten 16, 17/Dreieckselemente entsprechend den Längentoleranzen der zylindrischen Zellen. Somit wird der Längenausgleich und zugleich eine gleichmäßige Aufbringung der Kraft auf die einzelnen Zellen/Batteriezellen sichergestellt. Das Aufbringen einer Kraft kann, wie in Figur 16c gezeigt, zum Beispiel mit einer auf Zugspannung belasteten Schraube oder Gewindestange 29 erfolgen, welche zwischen den Zellen und durch die Kontaktplatten/Dreieckelemente verläuft. In Figur 16d ist das zusammengesetzte Batteriepaket 27 dargestellt. Die Kontaktplatten 16, 17 dienen bei diesem Beispiel nur der Aufbringung der Kontaktkräfte und leiten selbst keinen Strom. Sie können somit aus einem leitenden oder nicht leitenden Material bestehen. Die Leiter und Isolationen des Kontaktierungssystems zur Verschaltung der Zellen und der Verhinderung eines Kurzschlusses werden zwischen den Kontaktplatten/Dreieckselementen und den Kontakten der zylindrischen Batteriezellen positioniert, sind aber in den Figu-ren 16 a-d nicht dargestellt.

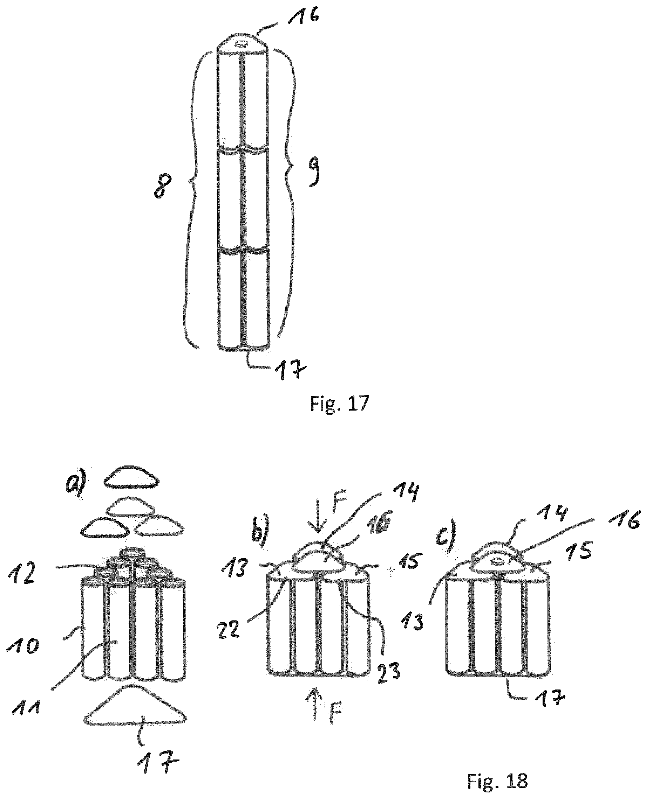

In der Figur 17 ist eine Weiterentwicklung des Ausführungsbeispiels der Figu-ren 16a-d mit der gemeinsamen Kontaktierung von Batterieeinheiten 8, 9 aus jeweils mehreren übereinander gestapelten Batteriezellen mit Kontaktplatten 16, 17 dargestellt. Hier werden nach demselben Prinzip drei aus jeweils drei zylindrischen Batteriezellen bestehenden Batterieeinheiten in der Form von Strängen mit zwei Kontaktplatten/Dreieckselementen geklemmt. Das Prinzip ermöglicht es, bei mehreren entlang einer Achse aneinander gereihten Zellen die Klemmung mit Längenausgleich zu realisieren. Die nötigen Leiter und Isolatoren zwischen den Kontaktplatten/Dreieckselementen und den zylindrischen Zellen zur Verschaltung der Zellen und der Verhinderung eines Kurzschlusses sind nicht eingezeichnet. Es können auch in die Kontaktplatten entsprechende Kontaktierungssysteme, beispielsweise in der Form von Leitern, die in ein Isoliermaterial eingebettet sind, integriert sein.

Auch die Erweiterung des ersten Ausführungsbeispiels mit zusätzlichen Zellen nebeneinander ist möglich, wie in den Figuren 18a, 18b und 18c dargestellt. Dafür werden in dem dargestellten Beispiel dreimal drei Batteriezellen 10, 11, 12 in einem Dreieck nebeneinander angeordnet, wie in Figur 18a dargestellt. Diese werden jeweils durch eine gesonderte obere Kontaktplatte 13, 14, 15 und eine gemeinsame untere Kontaktplatte 17 geklemmt, um den Ausgleich der Längentoleranzen jeweils in jeder Gruppe von drei Batteriezellen sicherzustellen. Die Klemmkraft wird durch eine weitere , gemeinsame obere Kontaktplatte 16, wie in Figur 18b dargestellt, aufgebracht, um die Längentoleranz zwischen den drei aus jeweils drei Batteriezellen gebildeten Paketen 13, 14, 15 auszugleichen. Auf diese Weise wird das Kontaktierprinzip des Klemmens mittels beweglichen Kontaktplatten kaskadiert In der Figur 18c ist das fertige, aus drei Batteriepaketen 13, 14, 15 bestehende Batteriepaket dargestellt, das im Ganzen durch die Kontaktplatten 16, 17 zusammengehalten und komprimiert wird.

Damit wird eine gleichmäßige Kraftverteilung auf alle Batteriezellen und alle Batteriepakete gewährleistet. Die Klemmkraft kann, wie in Figur 18c gezeigt, zum Beispiel mit einer auf Zugspannung belasteten Schraube oder Gewindestange aufgebracht werden. Diese verläuft zwischen den Dreieckselementen und Zellen und in der Mitte zwischen den Batteriepaketen 13, 14, 15 sowie durch die die Klemmkraft verteilenden Kontaktplatten hindurch. Es müssen, wie in Zeichnung 18 zu erkennen, nicht auf beiden Seiten vier Kontaktplatten verwendet werden, da eine verkippbare Kontaktplatte auf einer einzigen Seite eines Batteriepaketes bereits alle Längentoleranzen ausgleichen kann. Auf der gegenüberliegenden Seite (hier auf der untern Seite) kann einfach ein großes Dreieckselement/eine große, beispielsweise unbewegliche und nicht kippbare Kontaktplatte, eine Bodenplatte oder das Gehäuse verwendet werden. Der Ausgleich der Längentoleranzen sowie die gleichmäßige Kraftverteilung benötigen nur auf einer Seite die beweglichen Kontaktplatten. Wie bei den vorherigen Ausführungsbeispielen sind die Leiter/Kontaktelemente und Isolatoren zwischen den Kontaktplatten und den zylindrischen Batteriezellen oder Batteriepaketen zur Verschaltung der Zellen und der Verhinderung eines Kurzschlusses nicht dargestellt. Die Kontaktelemente/Leiter können auch hier ebenso in die Kontaktplatten integriert sein.

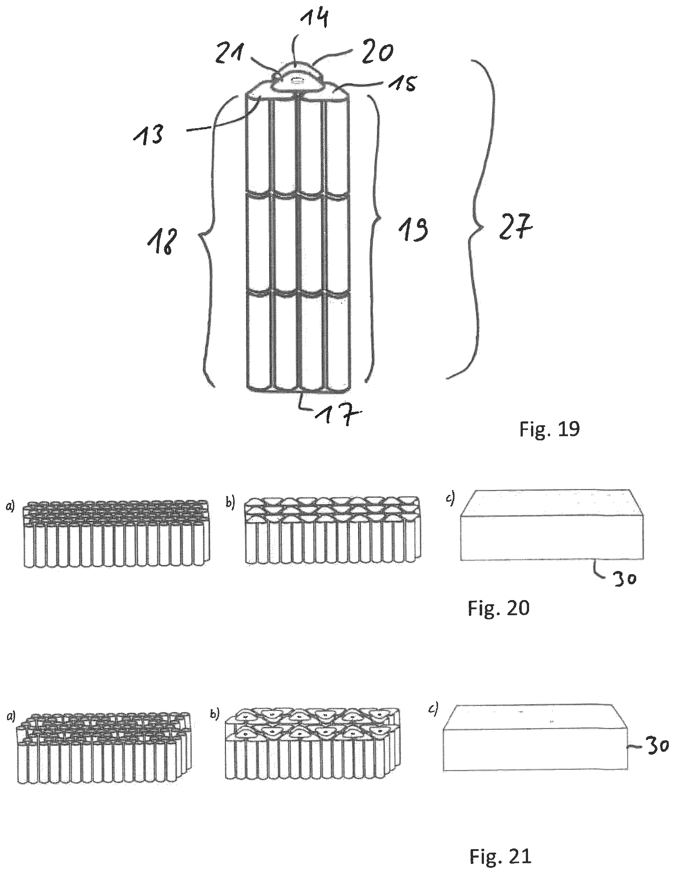

In der Figur 19 ist ein mittelgroßes Batteriesystem mit drei Batteriepaketen 18, 19, 20 gezeigt, von denen jedes aus drei parallel zueinander angeordneten Stapeln aus jeweils drei zylindrischen Batteriezellen besteht. Jedes Batteriepaket 18, 19, 20 umfasst somit 9 Batteriezellen, wobei die drei Stapel mit jeweils drei Batteriezellen jeweils zwischen einer pro Batteriepaket separaten oberen Kontaktplatte13, 14, 15 und einer gemeinsamen unteren Kontaktplatte zusammengepresst sind. Zwischen den einzelnen Batteriezellen eines einzelnen Stapels oder eines Batteriepakets 18, 19 sind keine Kontaktplatten nötig. Die Längentoleranzen der Batteriezellen können sich im besten Fall über die Anzahl von gestapelten Batteriezellen zumindest teilweise ausgleichen und die resultierende Toleranz kann gemeinsam durch eine bewegliche stirnseitige Kontaktplatte ausgeglichen werden.

In den Figuren 20a, 20b, 20c ist ein großes Batteriesystem aus nebeneinander angeordneten zylindrischen Batteriezellen dargestellt wobei in der Figur 20a die Batteriezellen einzeln nebeneinanderstehend dargestellt sind.

In der Figur 20b ist dargestellt, dass die nebeneinander angeordneten Batteriezellen jeweils zu Batteriepaketen mit drei Batteriezellen mit einer gemeinsamen Kontaktplatte zusammengefasst sind. Wie in Anschnitt a dargestellt, kann es jedoch auf eine beliebige Größe skaliert werden. Die jeweils drei unter einer gemeinsamen Kontaktplatte zusammengefassten zylindrischen Zellen werden, wie in Figur 20b dargestellt, gegen einen Gehäuseboden geklemmt. Die Klemmkraft wird durch auf Druck belastete Schrauben aufgebracht, die sich am Gehäuse 30 abstützen und gegen jeweils eine Kontaktplatte drücken, wie in Figur 20c angedeutet. Diese Schrauben gehen nicht durch die Kontaktplatten/Dreieckselemente durch, sondern drücken gegen diese. Die entsprechenden Isolatoren und Leiter sind nicht eingezeichnet. Diese können zum Beispiel als eine dünne Isolationsschicht mit entsprechend der gewünschten Verschaltung integrierten Leitern zwischen den Anschlüssen der Batteriezellen und den Kontaktplatten angeordnet sein. Durch eine sehr dünne und flexible Ausführung des Gehäusebodens und/oder der Kontaktplatten Ausführung passt sich jede Kontaktplatte bereits durch Biegen an die Längenunterschiede zwischen den Batteriezellen an. Eine Ausführung mit Kontaktbändern zwischen den Kontaktplatten und den Anschlüssen der Batteriezellen ist ebenso realisierbar.

In der Figuren 21a, 21b, 21c ist ein großes Batteriesystem aus nebeneinander angeordneten zylindrischen Zellen dargestellt, wobei jeweils drei Batteriezellen als Paket gemeinsam mit Kontaktplatten geklemmt und dann weiter jeweils drei solche Pakete mit einer gemeinsamen Kontaktplatte geklemmt werden. Die Klemmung findet in jedem der Fälle gegen einen unteren Gehäuseboden eines Gehäuses 30 statt.

Die Anordnung der Zellen ist in Figur 21a dargestellt und kann auf eine beliebige Größe skaliert werden. Es werden immer neun zylindrische Zellen, wie bei dem in Figur 21b dargestellten Ausführungsbeispiel, von vier Dreieckselementen/Kontaktplatten geklemmt. Die Klemmkraft kann, wie in Figur 21c gezeigt, zum Beispiel mit einer auf Zugspannung belasteten Schraube oder Gewindestange aufgebracht werden. Diese verläuft durch das Gehäuse sowie zwischen den Dreieckselementen und Zellen als auch durch die die Klemmkraft verteilende Kontaktplatte hindurch. Eine Gegenkraft wird durch das Gehäuse aufgebracht und ist in dem dargestellten Fall so dünn, dass es sich den unterschiedlichen Höhen der Batteriezellen/Batterieelemente anpasst. Die entsprechenden Isolatoren und Leiter sind nicht dargestellt. Diese können zum Beispiel als eine dünne Isolationsschicht mit entsprechend der gewünschten Verschaltung integrierten Leitern zwischen den Batteriezellen und den Kontaktplatten sowie dem Gehäuseboden geklemmt werden. Durch die dünne Ausführung besteht kein Einfluss auf den Längenausgleich, die Platte passt sich an. Eine Ausführung als Leiterbänder wäre ebenso realisierbar.

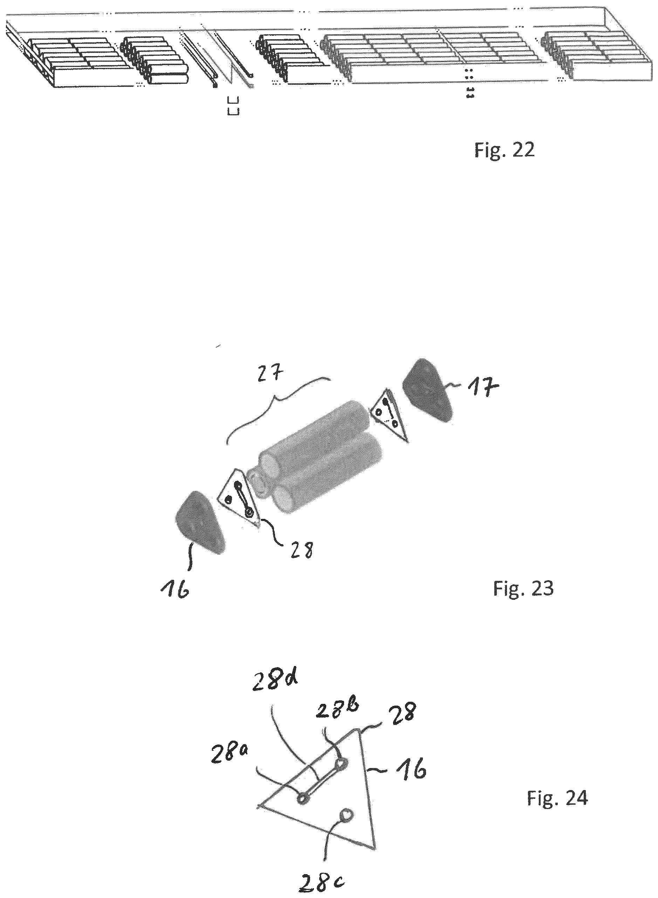

Die Figur 22 zeigt ein großes Batteriesystem mit in Axialrichtung und nebeneinander angeordneten zylindrischen Batteriezellen

Das in Figur 7 dargestellte Ausführungsbeispiel zeigt bereits parallel zueinander nebeneinander angeordnete Batteriezellen, die in Axialrichtung und nebeneinander aneinandergereiht sind. Die Figur 7 zeigt bereits eine Anordnung der zylindrischen Batteriezellen, die mit gemeinsamen Kontaktplatten komprimiert sein können, beispielsweise in einem Gehäuse mit auf Druck belasteten Schrauben. Diese Figur zeigt auch an dem Beispiel, wie die Ausführung von Isolatoren, Kontaktelementen des Kontaktsystems und Leitern an den Batteriestapeln gestaltet sein kann, um einen Spannungsabgriff von mehr als 60 Volt zu verhindern. Ähnliche Anordnungen mit Isolatoren und Leitern sind in vielen anderen Fällen, beispielsweise auch in der Anordnung der Figur 22, zwischen Kontaktplatten und den Batteriezellen verbaut, um die gewünschte Verschaltung zu erreichen und Spannungen oberhalb von 60 Volt sowie einen Kurzschluss zu verhindern, diese sind jedoch nicht in allen Fällen eingezeichnet.

In der Figur 23 ist in einer Explosionsdarstellung ein aus drei Batteriezellen bestehendes Batteriepaket 27 dargestellt, das zwischen zwei Kontaktplatten 16, 17 geklemmt ist. Zwischen den Batteriezellen und den Kontaktplatten 16, 17 sind jeweils Kontaktelemente 28 eingeklemmt, die elektrische Kontakte 28a, 28b, 28c aufweisen können, die detaillierter in der Figur 24 dargestellt sind. Die Kontakte 28a, 28b, 28c sind grundsätzlich in dem Material des Kontaktelementes 28 voneinander elektrisch isoliert und selektiv miteinander durch elektrische Leiter 28d verbunden, um bestimmte elektrische Verschaltungen zu erreichen. Das Kontaktelement kann zu diesem Zweck grundsätzlich aus einem Isoliermaterial, beispielsweise einem Kunststoff oder einer Keramik bestehen und in dieses Material können leitende Kontakte 28a, 28b, 28c und Verbindungsleiter 28d integriert sein. Auch die Kontaktplatten können beispielsweise in derselben Weise aufgebaut sein und dann selbst als Kontaktelemente fungieren.

## Patentansprüche

1. Batteriesystem mit zwei oder drei oder mehr als drei elektrischen Batterieeinheiten (1, 2, 3, 4, 5, 6, 7, 8, 9, 10, 11, 12, 13, 14, 15, 18, 19, 20) von denen jede jeweils eine Längsachse (24, 24a, 24b) und zwei von der Längsachse durchsetzte, einander gegenüberliegende Stirnseiten (25, 26) sowie an jeder Stirnseite einen elektrischen Kontakt aufweist,
**dadurch gekennzeichnet, dass** jeweils zwei oder drei oder mehr als drei Batterieeinheiten in einem Batteriepaket (27) zusammengefasst sind und parallel zueinander insbesondere derart angeordnet sind, dass ihre Längsachsen die Kanten eines dreikantigen oder mehrkantigen Prismas bilden, wobei die elektrischen Kontakte aller drei oder mehr Batterieeinheiten an einem oder beiden Enden gemeinsam mittels einer starren, gegen die Kontakte gepressten, bewegbaren Kontaktplatte (16, 17, 21, 22, 23), insbesondere unter Zwischenfügung von Kontaktelementen (28) oder Leiterelementen, elektrisch kontaktiert sind.

2. Batteriesystem nach Anspruch 1 **dadurch gekennzeichnet, dass** eine oder mehrere Kontaktplatten (16, 17, 21, 22, 23) eines Batteriepaketes (27) gegen die Längsachsen der Batterieeinheiten (1, 2, 3, 4, 5, 6, 7, 8, 9, 10, 11, 12. 13, 14, 15, 18, 19, 20) in einer oder mehreren Richtungen kippbar ist.

3. Batteriesystem nach Anspruch 1 oder 2, **dadurch gekennzeichnet, dass** zwei an gegenüberliegenden Enden eines Batteriepaketes (27) angeordnete Kontaktplatten (16, 17, 21, 22, 23) durch ein Zugelement (29), insbesondere eine Schraube oder eine Gewindestange, gegeneinander verspannt sind.

4. Batteriesystem nach Anspruch 1, 2 oder 3, **dadurch gekennzeichnet, dass** ein oder mehrere Batteriepakete (27) in einer Aufnahme, insbesondere in einem Gehäuse (30) angeordnet sind und wenigstens eine bewegliche Kontaktplatte (16, 17, 21, 22, 23) oder zwei an gegenüberliegenden Enden eines Batteriepaketes (27) angeordnete Kontaktplatten, von denen wenigstens eine bewegbar ist, durch ein Element der Aufnahme oder ein an der Aufnahme abgestütztes Element gegen die elektrischen Kontakte an einem Ende des Batteriepaketes pressbar oder gepresst sind, insbesondere unter Zwischenfügung von Kontaktelementen (28) oder Leiterelementen.

5. Batteriesystem nach Anspruch 4, **dadurch gekennzeichnet, dass** eine in einer Gewindebohrung der Aufnahme oder des Gehäuses (30) geführte Schraube oder Gewindestange oder ein spannbares elastisches Element gegen eine oder mehrere Kontaktplatte (16, 17, 21, 22, 23) pressbar oder gepresst ist.

6. Batteriesystem mit zwei oder mehr elektrischen Batterieeinheiten (1, 2, 3, 4, 5, 6, 7, 8, 9, 10, 11, 12. 13, 14, 15, 18, 19, 20), die jeweils zwei elektrische Anschlüsse oder Kontakte aufweisen, **dadurch gekennzeichnet, dass** jeweils wenigstens zwei Batterieeinheiten elektrische Anschlüsse mit Blechfahnen (31, 32) aufweisen und die Blechfahnen von wenigstens zwei verschiedenen Batterieeinheiten einander kontaktieren und gemeinsam gefalzt sind.

7. Batteriesystem nach Anspruch 6 **dadurch gekennzeichnet, dass** jeweils die Blechfahnen von drei oder mehr als drei Batterieeinheiten (1, 2, 3, 4, 5, 6, 7, 8, 9, 10, 11, 12. 13, 14, 15, 18, 19, 20) gemeinsam gefalzt sind.

8. Batteriesystem nach Anspruch 6 oder 7 **dadurch gekennzeichnet, dass** die Blechfahnen ein Metall mit vernickeltem Stahl oder Eisen, Kupfer oder Aluminium oder einer Legierung mit einem dieser Materialien enthalten.

9. Batteriesystem mit zwei oder mehr elektrischen Batterieeinheiten (1, 2, 3, 4, 5, 6, 7, 8, 9, 10, 11, 12. 13, 14, 15, 18, 19, 20), die jeweils zwei elektrische Anschlüsse aufweisen, **dadurch gekennzeichnet, dass** jeweils wenigstens zwei Anschlüsse unmittelbar einander benachbarter Batterieeinheiten oder ein Anschluss einer Batterieeinheit und ein Anschluss eines Kontaktierungssystems durch eine Presspassung (33, 34, 35) elektrisch miteinander verbunden sind.

10. Batteriesystem nach Anspruch 9, **dadurch gekennzeichnet, dass** eine Mehrzahl von Batterieeinheiten (1, 2, 3, 4, 5, 6, 7, 8, 9, 10, 11, 12. 13, 14, 15, 18, 19, 20) an wenigstens einem ihrer elektrischen Anschlüsse eine Ausnehmung oder eine von einem Randsteg umgebene Aufnahme aufweist, in die jeweils ein Kontaktbolzen einer weiteren Batterieeinheit oder eines Kontaktsystems in einer Presspassverbindung einpressbar ist, oder eine Erhebung, insbesondere einen Bolzen, der in eine passende Ausnehmung an einem Kontaktsystem oder einer anderen Batterieeinheit einpressbar ist.

11. Batteriesystem nach einem der Ansprüche 1 bis 10, **dadurch gekennzeichnet, dass** eine Batterieeinheit (1, 2, 3, 4, 5, 6, 7, 8, 9, 10, 11, 12. 13, 14, 15, 18, 19, 20) durch jeweils eine Batteriezelle (5, 6, 7, 10, 11, 12) oder einen Stapel von Batteriezellen oder ein Stapel von Batteriepaketen gebildet ist.

12. Batteriesystem nach einem der Ansprüche 1 bis 11, dadurch dass es mehr als 100, insbesondere mehr als 500 Batteriezellen aufweist.

13. Batteriesystem nach einem der Ansprüche 1 bis 5, **dadurch gekennzeichnet, dass** eine oder mehrere, insbesondere alle Kontaktpatten (16, 17, 21, 22, 23) aus Metallblechen oder aus Kunststoffplatten aus einem elektrisch leitenden Kunststoff oder aus einem isolierenden Kunststoff bestehen, wobei insbesondere in die Kontaktplatten integriert oder zwischen diesen und den Kontakten von Batterieeinheiten (1, 2, 3, 4, 5, 6, 7, 8, 9, 10, 11, 12. 13, 14, 15, 18, 19, 20) Leiterelemente vorgesehen sind.

14. Batteriesystem nach Anspruch 13, **dadurch gekennzeichnet, dass** die Kontaktplatten (16, 17, 21, 22, 23) jeweils eine abgerundete oder nicht abgerundete dreieckige Form oder eine dreizählige Symmetrie aufweisen.

15. Batteriesystem nach einem der Ansprüche 1 bis 5 oder 13 oder 14, **dadurch gekennzeichnet, dass** die Batteriezellen (5, 6, 7, 10, 11, 12) jeweils in Richtung ihrer Längsachse (24, 24a, 24b) größere Abmessungen haben als in den senkrecht darauf stehenden Richtungen und insbesondere jeweils eine prismatische oder zylindrische Form aufweisen.
